# EUROPÄISCHE PATENTSCHRIFT

(11) **EP 1 984 224 B1**
(45) Veröffentlichungstag und Bekanntmachung des Hinweises auf die Patenterteilung: **08.07.2015**
(21) Anmeldenummer: 07704380.0
(22) Anmeldetag: 06.02.2007
(51) Int. Cl.: B60W 30/18, B60T 7/08, B60T 8/40, B60T 13/68, B60T 17/18, B60W 10/08, B60W 10/18

(54) **VERFAHREN UND VORRICHTUNG ZUM BETRIEB EINES KRAFTFAHRZEUGS**
METHOD AND DEVICE FOR OPERATING A MOTOR VEHICLE
PROCÉDÉ ET DISPOSITIF POUR FAIRE FONCTIONNER UN VÉHICULE AUTOMOBILE

(30) Priorität: 10.02.2006 DE 102006006492; 02.09.2006 DE 102006041218
(43) Veröffentlichungstag der Anmeldung: 29.10.2008
(73) Patentinhaber: Continental Teves AG & Co. oHG, 60488 Frankfurt am Main (DE)
(72) Erfinder: BAIJENS, Mark, 63067 Offenbach (DE); MEURERS, Thomas, 60488 Frankfurt/M (DE); ORIANS, Andreas, 64293 Darmstadt (DE)
(86) Internationale Anmeldenummer: PCT/EP2007/051097
(87) Internationale Veröffentlichungsnummer: WO 2007/090823

(56) Entgegenhaltungen:
- EP-A- 1 582 389
- WO-A-02/49894
- DE-A1- 10 146 770
- DE-A1- 19 838 885

## Beschreibung

Die vorliegende Erfindung betrifft ein Verfahren zum Betrieb eines Kraftfahrzeugs, nach den Merkmalen vom Oberbegriff vom Patentanspruch 1, wobei eine Betriebsbremsanlage mit einem ansteuerbaren Druckerzeuger und eine mittels Fremdkraft betätigbare Feststellbremsanlage aufweist, wobei die Feststellbremsanlage im wesentlichen aus einem Bedienelement, einer elektronischen Steuereinheit, der Raddrehzahlwerte von Raddrehzahlsensoren zugeführt werden, mindestens einer Einheit zur Erzeugung einer Zuspannkraft sowie mit durch die Einheit zuspannbaren Bremseinrichtungen an wenigstens einer Achse gebildet wird, und wobei eine Betätigung des Bedienelementes während der Fahrt des Kraftfahrzeugs eine Ansteuerung des Druckerzeugers zur Durchführung eines Notbremsvorgangs bewirkt, während eine Betätigung des Bedienelement im Stillstand des Kraftfahrzeugs eine Ansteuerung der Einheit zur Einleitung eines Feststellbremsvorganges bewirkt, und dass während der Durchführung eines Notbremsvorganges weitere Maßnahmen zur Reduzierung der Geschwindigkeit des Kraftfahrzeuges durchgeführt werden. Außerdem betrifft die vorliegende Erfindung eine entsprechende Vorrichtung zum Betrieb eines Kraftfahrzeugs.

Die Anzahl an Assistenzfunktionen im Kraftfahrzeug nimmt ständig zu. Mit Einbau einer mittels Fremdkraft betätigbaren Feststellbremse konnte auch die Notbremsung über Feststellbremse verbessert werden. Wird während der Fahrt das Bedienelement der Feststellbremse betätigt, so führt dies zu einer hydraulischen Abbremsung über die Betriebsbremse, indem ein Druckerzeuger angesteuert wird. Diese Funktion ist auch als dynamische Bremsfunktion bekannt und ist eine Notbremsfunktion.

Ein derartiges Verfahren ist aus der EP 741 066 B1 bekannt. Bei dem vorbekannten Verfahren ist ein Druckerzeuger vorgesehen, der auf eine Reibungsbremse wirkt und hierdurch eine Notbremsung einleitet. Dabei ist eine gemeinsame Betätigungseinrichtung für die Notbrems- und Feststellbremsanlage vorgesehen, die mit Hilfe einer Logikschaltung bei v > 0 durch Ansteuerung des Druckerzeugers eine Notbremsung einleitet, während bei v = 0 die Feststellbremse aktiviert wird. Das vorbekannte Verfahren sieht jedoch nur eine Abbremsung des fahrenden Kraftfahrzeugs über die Betriebsbremse vor. Da es sich um eine Notbremsfunktion handelt, ist es notwendig, den Wagen so schnell wie möglich in den Stillstand zu versetzen. Dabei wird aber das Motormoment des Antriebsmotors, das einer der Notbremsung entgegenwirkt, nicht berücksichtigt.

Die DE 101 46 770 A1 beschreibt eine elektropneumatische Bremsanlage in einkreisiger Ausgestaltung für ein fahrerlos betreibbares Nutzfahrzeug mit Elektromotor einschließlich Federspeicherbremszylinder als Notbremsaktuatoren, wobei es durch Überwachungseinrichtungen zwecks Vermeidung unzulässiger Betriebszustände ermöglicht wird, im Betrieb mit einem Fahrer diesem die Verantwortung zu übertragen, und einen Eingriff Dritter, oder auch ein manuelles Auslösen eines Notbremsvorgangs, zu verhindern.

Es ist daher Aufgabe der vorliegenden Erfindung, ein Verfahren zum Betrieb eines Kraftfahrzeuges der eingangs genannten Gattung, dahingehend zu verbessern, dass das Kraftfahrzeug während eines Notbremsvorganges möglichst schnell in den Stillstand gelangt.

Diese Aufgabe wird erfindungsgemäß durch ein Verfahren mit den Merkmalen des Anspruchs 1 gelöst. Dabei ist vorgesehen, dass zur Reduzierung der Geschwindigkeit des Kraftfahrzeuges während der Durchführung eines Notbremsvorganges die Stellung des Fahrpedals ignoriert wird und eine mögliche Beschleunigungsanforderung des Fahrzeugführers durch Niederdrücken des Fahrpedals nicht durchgeführt wird.

Weitere vorteilhafte Ausgestaltungen sind den Unteransprüchen entnehmbar. So ist in einer besonders vorteilhaften Weiterbildung des erfindungsgemäßen Verfahrens vorgesehen, dass zur Reduzierung der Geschwindigkeit des Kraftfahrzeuges während der Durchführung eines Notbremsvorganges das Motormoment des Antriebsmotors unterdrückt wird. Außerdem wird der Leerlauf des Antriebsmotors eingelegt.

Bei einer besonders vorteilhaften Weiterbildung des erfindungsgemäßen Verfahrens ist vorgesehen, dass die weiteren Maßnahmen zur Reduzierung der Geschwindigkeit des Kraftfahrzeuges beendet werden, sobald sich das Kraftfahrzeug im Stillstand befindet.

Nachdem die Durchführung eines Notbremsvorganges das Kraftfahrzeug derart verzögert hat, dass sich dessen Geschwindigkeit unterhalb einer vorbestimmten Geschwindigkeitsschwelle befindet, wird die Parkstellung eines automatischen Getriebes eingelegt. Die vorbestimmte Geschwindigkeitsschwelle beträgt vorzugsweise 7 km/h.

Die Aufgabe wird mit einer Vorrichtung nach Anspruch 6 dadurch gelöst, dass die Mittel zur Reduzierung der Geschwindigkeit des Kraftfahrzeuges während der Durchführung eines Notbremsvorganges das Motormoment des Antriebsmotors unterdrücken, die Stellung des Fahrpedals ignorieren, sodass eine mögliche Beschleunigungsanforderung des Fahrzeugführers nicht durchgeführt wird, und/oder den Schub des Antriebsmotors abschalten.

Die Mittel beenden die Maßnahmen zur Reduzierung der Geschwindigkeit des Kraftfahrzeuges, sobald sich das Kraftfahrzeug im Stillstand befindet.

Bei einer vorteilhaften Weiterbildung des Erfindungsgegenstandes ist vorgesehen, dass der Druckerzeuger als hydraulische Pumpe ausgebildet ist.

Die Erfindung wird nachfolgend anhand eines Ausführungsbeispiels im Zusammenhang mit der beiliegenden Zeichnung näher erläutert. In der Zeichnung zeigen:
- Fig. 1: ein Schaltbild einer hydraulischen Bremsanlage, an der das erfindungsgemäße Verfahren durchführbar ist;
- Fig. 2: ein erstes Ablaufdiagramm des erfindungsgemäßen Verfahrens und
- Fig. 3 bis 6: weitere Ablaufdiagramme einer Weiterbildung des erfindungsgemäßen Verfahrens.

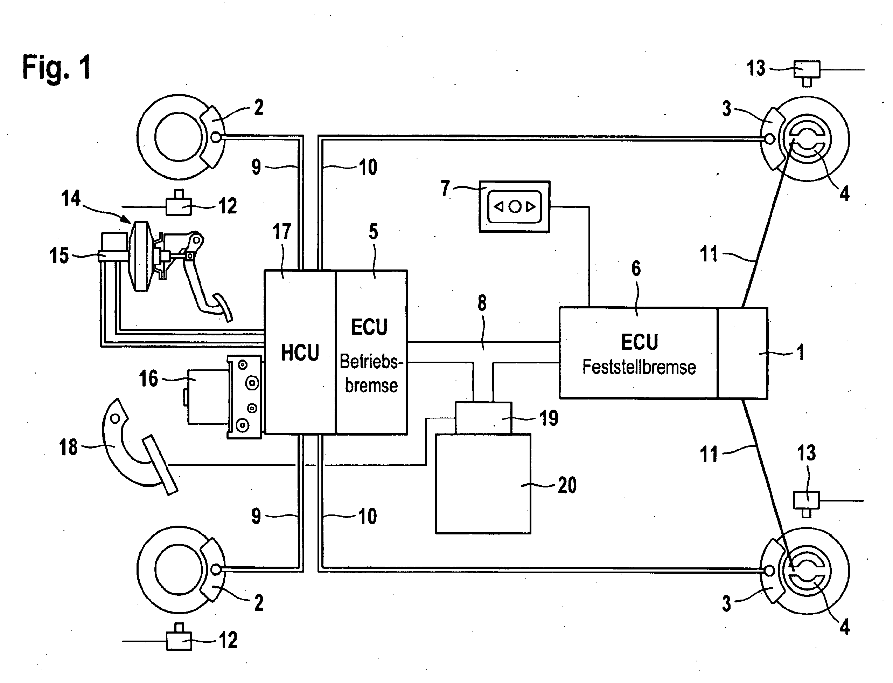

In Fig. 1 ist ein Schaltbild einer hydraulischen Bremsanlage schematisch dargestellt. Die hydraulische Bremsanlage wird durch eine Betriebsbremsanlage und eine Feststellbremsanlage gebildet und weist an einer ersten Achse, der Vorderachse, Radbremsen 2 auf, die während Betriebsbremsungen über eine hydraulische Leitung 9 mit Druck beaufschlagbar sind. Zur Kontrolle der gewünschten Bremsverzögerung und zur Realisierung einer Blockierschutz-Regelung sowie zur Detektierung der Fahrzeuggeschwindigkeit sind den Rädern der Vorderachse Raddrehzahlsensoren 12 zugeordnet, deren Ausgangssignale einer elektronischen Steuer- und Regeleinheit (ECU) 5 zugeführt werden. Diese elektronische Steuer- und Regeleinheit 5 ist der Betriebsbremsanlage zugeordnet. An einer zweiten Achse, der Hinterachse, sind ebenfalls Radbremsen 3 vorgesehen, die während Betriebsbremsungen über eine zweite hydraulische Leitung 10 mit Druck beaufschlagbar sind. Die Raddrehzahlen der Räder der Hinterachse werden durch Raddrehzahlsensoren 13 ermittelt und der eben erwähnten elektronischen Steuer- und Regeleinheit 5 zugeführt. Außerdem weisen die Räder der Hinterachse neben den Radbremsen 3 für Betriebsbremsungen auch eine mittels Fremdkraft elektromechanisch betätigbare Feststellbremse auf. Die elektromechanisch betätigbare Feststellbremse umfasst zwei verriegelbare Bremseinrichtungen 4, die als Trommelbremsen 4 mit jeweils einem nicht näher dargestellten Spreizschloss ausgebildet sind. Das eben genannte Spreizschloss ist mittels eines Kabelzugs 11 von einer elektromechanischen Stelleinheit 1 betätigbar, wonach die Trommelbremsen 4 zugespannt werden. Ein Feststellbremsvorgang wird nach der Betätigung eines Bedienelementes 7 durch den Fahrzeugführer durchgeführt. Dabei werden die Ausgangssignale des Bedienelementes 7 einer der elektromechanischen Feststellbremse zugeordneten elektronischen Steuereinheit (ECU) 6 zugeführt, die die bereits erwähnte elektromechanische Stelleinheit 1 entsprechend ansteuert. Die eben genannte elektronische Steuereinheit 6 sowie die dem Betriebsbremssystem zugeordnete elektronische Steuer- und Regeleinheit 5 kommunizieren miteinander über eine Datenleitung 8, die beispielsweise als CAN-Verbindung ausgebildet ist.

An die eben erwähnte Datenleitung 8 ist außerdem ein Motorsteuergerät 19 für den Antriebsmotor 20 des Kraftfahrzeugs angeschlossen. Das Motorsteuergerät 19 und der Antriebsmotor 20 sind in Fig. 1 lediglich schematisch dargestellt. Dem Motorsteuergerät 19 werden außerdem die Ausgangssignale eines Fahrpedals 18 zugeführt. Das heißt, dass eine Beschleunigungsanforderung des Fahrzeugführers durch Niederdrücken des Fahrpedals 18 vom Motorsteuergerät 19 verarbeitet wird und an den Antriebsmotor 20 entsprechend weiter gegeben wird.

Zur Durchführung einer Betriebsbremsung betätigt der Fahrzeugführer einen pedalbetätigbaren Bremskraftverstärker 14, der im vorliegenden Ausführungsbeispiel als Unterdruckbremskraftverstärker mit nachgeschaltetem Tandem-Hauptzylinder 15 ausgebildet ist. Wie aus Fig. 1 ersichtlich ist, wird der im Tandem-Hauptzylinder eingesteuerte Druck einer hydraulischen Regeleinheit (HCU), die mit dem Bezugszeichen 17 versehen ist, zugeführt. Der hydraulischen Regeleinheit 17 ist ein fremdansteuerbarer Druckerzeuger 16 zugeordnet, der als hydraulische Pumpe 16 ausgebildet ist und den zur Durchführung von Blockierschutzregelungen notwendigen hydraulischen Druck bereitstellt.

Wie bereits erwähnt, wird ein Feststellbremsvorgang eingeleitet, wenn der Fahrzeugführer im Stillstand des Kraftfahrzeugs das Bedienelement 7 betätigt. Das Ausgangssignal wird der Steuereinheit 6 der Feststellbremse zugeführt, die die elektromechanische Stelleinheit zur Erzeugung einer Zuspannkraft entsprechend ansteuert. Mit Hilfe des Bedienelementes 7 ist aber auch die Durchführung einer Notbremsfunktion realisierbar: Wird während der Fahrt des Kraftfahrzeugs das Bedienelement 7 der Feststellbremse betätigt, so führt dies zu einer hydraulischen Abbremsung über die Betriebsbremse. Die Steuereinheit 6 der Feststellbremse gibt den Verzögerungswunsch an die Steuer- und Regeleinheit 5 der Betriebsbremse weiter, die wiederum die hydraulische Pumpe 16 zur Erzeugung eines hydraulischen Drucks in den Radbremsen 2, 3 ansteuert. Mit anderen Worten wird die elektromechanische Stelleinheit 1 bei der Betätigung des Bedienelementes 7 nur dann zur Erzeugung einer Zuspannkraft angesteuert, wenn das Kraftfahrzeug stillsteht und andernfalls wird der Druckerzeuger 16 der Betriebsbremsanlage zur Durchführung einer Notbremsung angesteuert.

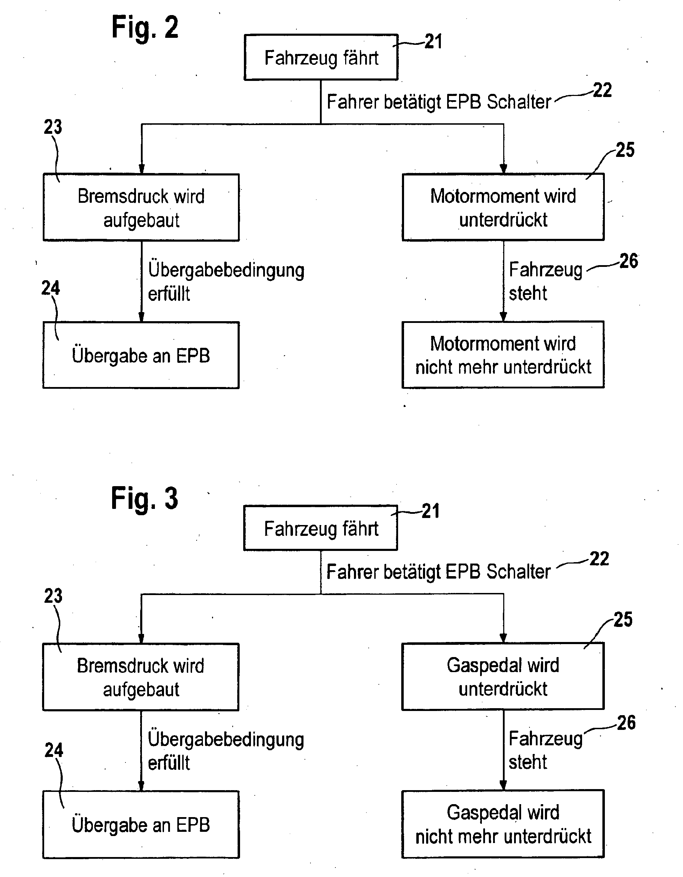

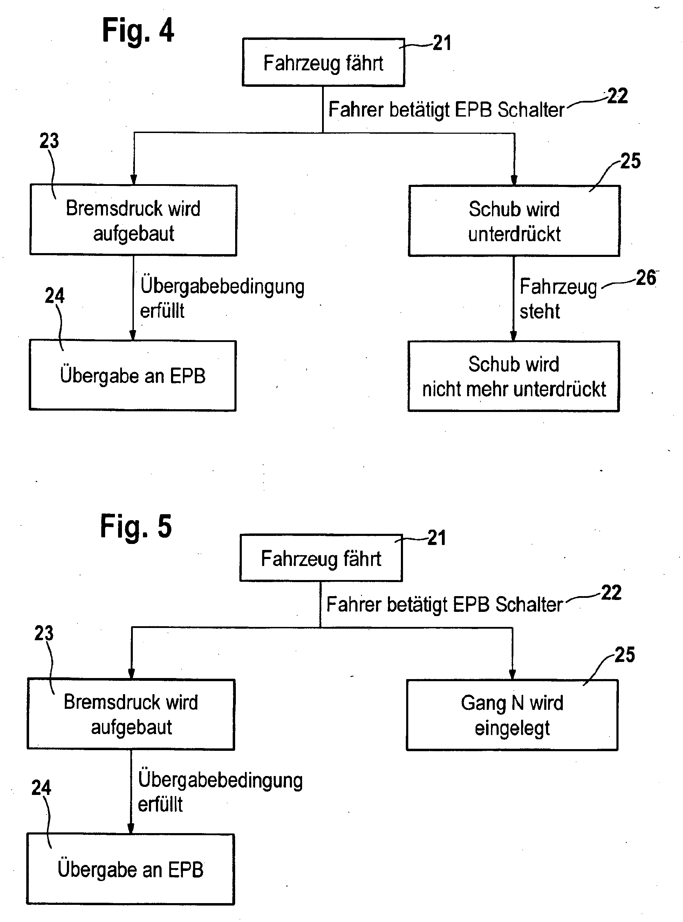

Bei dieser Notbremsfunktion ist das Ziel, das Kraftfahrzeug so schnell wie möglich in den Stillstand zu versetzen. Dazu ist vorgesehen, dass während der Durchführung eines Notbremsvorganges weitere Maßnahmen zur Reduzierung der Geschwindigkeit des Kraftfahrzeuges durchgeführt werden, wie nachfolgend anhand von Fig. 2 bis 5 näher erläutert wird.

Im Verfahrensschritt 21 wird zunächst geprüft, ob das Kraftfahrzeug fährt, d.h. ob sich die Geschwindigkeit v des Kraftfahrzeugs deutlich von Null unterscheidet, was beispielsweise mit den anhand von Fig. 1 erwähnten Raddrehzahlsensoren 12, 13 ermittelbar ist. Nach einer Betätigung des Bedienelementes 7 im Verfahrensschritt 22 wird mit Hilfe der hydraulischen Pumpe 16 in allen Radbremsen 2, 3 eine Bremskraft aufgebaut, wie es der Verfahrensschritt 23 verdeutlicht. Im Stillstand erfolgt im Verfahrensschritt 24 eine Übergabe an die Feststellbremsanlage (EPB), sofern vorbestimmte Übergabebedingungen erfüllt werden. Bei der Übergabe an die Feststellbremsanlage wird die elektromechanische Stelleinheit 1, wie bereits beschrieben, zur Durchführung eines Feststellbremsvorganges angesteuert.

Gleichzeitig zum Druckaufbau mit Hilfe der hydraulischen Pumpe 16 in allen Radbremsen 2, 3 werden weitere Maßnahmen zur Reduzierung der Geschwindigkeit des Kraftfahrzeugs durchgeführt: Falls das Fahrzeug fährt und der Fahrzeugführer das Bedienelement 7 betätigt, was im Verfahrensschritt 22 abgefragt wird, werden gleichzeitig zur beschriebenen Ansteuerung der hydraulischen Pumpe 16 weitere Maßnahmen zur Reduzierung der Geschwindigkeit des Kraftfahrzeugs im Verfahrensschritt 25 durchgeführt. Diese Maßnahmen werden durch eine Unterdrückung des Motormoments des Antriebsmotors 20 realisiert. Damit liegt weniger Antrieb an den Rädern an und somit bremst das Kraftfahrzeug schneller ab.

Die Maßnahmen werden auch durch ein Ignorieren des Fahrpedals 18 realisiert. Da der Fahrzeugführer das Bedienelement 7 drückt, könnte er mit dem Fuß Gas geben, was bei der Durchführung einer Notbremsung unerwünscht ist. Daher wird das Gas geben des Fahrzeugführers unterdrückt und eine mögliche Beschleunigungsanforderung des Fahrzeugführers durch Niederdrücken des Fahrpedals 18 nicht durchgeführt. Dies führt zu einem schnelleren Erreichen des Stillstands des Kraftfahrzeugs.

Sobald das Fahrzeug im Verfahrensschritt 26 in den Stillstand gelangt ist, werden die eben beschriebenen Maßnahmen, das heißt die Unterdrückung des Motormoments und das Ignorieren der Fahrpedalstellung, im Stillstand wieder zurück genommen bzw. beendet um dem Fahrzeugführer wieder die Möglichkeit zur Weiterfahrt zu geben.

Eine weitere Maßnahme zur Reduzierung der Kraftfahrzeug-Geschwindigkeit ist das Einlegen des Leerlaufs des Antriebsmotors 20. Automatisierte Schaltgetriebe oder elektrische Automatikgetriebe bieten die Möglichkeit einer Gangwahl. Damit kann auch der Leerlauf angefordert werden und es befindet sich kein Antriebsmoment mehr auf den Rädern was zu einer höheren Verzögerung während der Durchführung einer Notbremsung führt. Beim Lösen des Bedienelementes 7 wird wieder ein Fahrgang eingelegt. Außerdem ist ein Gangwechsel bei den automatisierten Schaltgetrieben und den elektrischen Automatikgetrieben möglich, sodass zur Reduzierung der Fahrzeuggeschwindigkeit ein kleinerer Fahrgang angefordert wird. Dies bewirkt eine Schubabschaltung und somit eine höhere Verzögerung. Beendet der Fahrzeugführer die Betätigung des Bedienelements 7 wird zu dem vorher eingelegten Fahrgang zurück gewechselt.

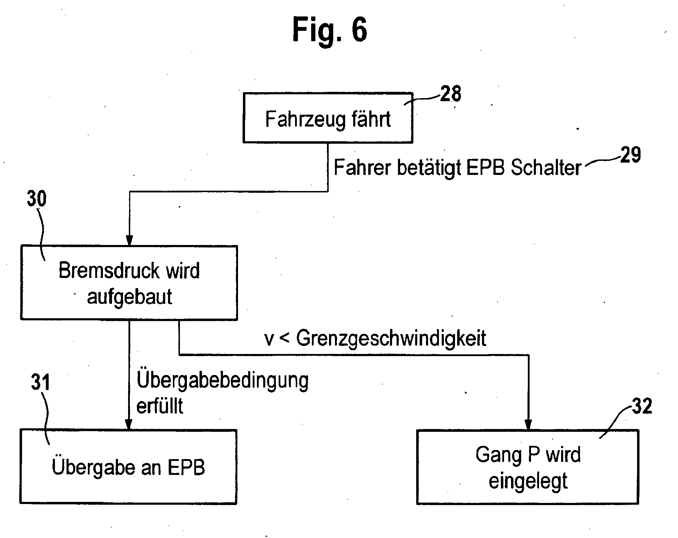

Bei elektrischen Automatikgetrieben ergibt sich eine weitere Möglichkeit bei kleinen Geschwindigkeiten eine höhere Verzögerung zu erreichen, wie es das Verfahren nach Fig. 6 darstellt. Zunächst wird im Verfahrensschritt 28 wiederum geprüft, ob das Kraftfahrzeug fährt, das heißt ob dessen Geschwindigkeit entscheidend größer Null ist. Nach einer Betätigung des Bedienelementes 7 im Verfahrensschritt 29 wird mit Hilfe der hydraulischen Pumpe 16 in allen Radbremsen 2, 3 eine Bremskraft aufgebaut. Dies ist im Verfahrensschritt 30 verdeutlicht. Fällt die Geschwindigkeit unter einen vorbestimmten Grenzwert V_{grenz}, so wird im Verfahrensschritt 32 die Parkstellung des automatischen angefordert. Der eben genannte Grenzwert V_{grenz} beträgt etwa 7km/h. Durch diese Maßnahme kommt das Kraftfahrzeug sehr schnell in den Stillstand und ist gleichzeitig gesichert. Sofern vorbestimmte Übergabebedingungen erfüllt sind, übernimmt die Feststellbremse im Verfahrensschritt 31 das Kraftfahrzeug.

## Patentansprüche

1. Verfahren zum Betrieb eines Kraftfahrzeugs, das eine Betriebsbremsanlage mit einem ansteuerbaren Druckerzeuger (16) und eine mittels Fremdkraft betätigbare Feststellbremsanlage aufweist, wobei die Feststellbremsanlage im wesentlichen aus einem Bedienelement (7), einer elektronischen Steuereinheit (6), der Raddrehzahlwerte von Raddrehzahlsensoren (12, 13) zugeführt werden, mindestens einer Einheit (1) zur Erzeugung einer Zuspannkraft sowie mit durch die Einheit (1) zuspannbaren Bremseinrichtungen (4) an wenigstens einer Achse gebildet wird, und wobei eine Betätigung des Bedienelementes (7) während der Fahrt des Kraftfahrzeugs eine Ansteuerung des Druckerzeugers (16) zur Durchführung eines Notbremsvorgangs bewirkt, während eine Betätigung des Bedienelementes (7) im Stillstand des Kraftfahrzeugs eine Ansteuerung der Einheit (1) zur Einleitung eines Feststellbremsvorganges bewirkt, und während der Durchführung eines Notbremsvorganges weitere Maßnahmen zur Reduzierung der Geschwindigkeit des Kraftfahrzeuges durchgeführt werden, **dadurch gekennzeichnet, dass** zur Reduzierung der Geschwindigkeit des Kraftfahrzeuges während der Durchführung eines Notbremsvorganges die Stellung des Fahrpedals (18) ignoriert wird und eine mögliche Beschleunigungsanforderung des Fahrzeugführers durch Niederdrücken des Fahrpedals (18) nicht durchgeführt wird.

2. Verfahren nach Anspruch 1, **dadurch gekennzeichnet, dass** zur Reduzierung der Geschwindigkeit des Kraftfahrzeuges während der Durchführung eines Notbremsvorganges das Motormoment des Antriebsmotors (20) unterdrückt wird.

3. Verfahren nach einem der vorhergehenden Ansprüche, **dadurch gekennzeichnet, dass** zur Reduzierung der Geschwindigkeit des Kraftfahrzeuges während der Durchführung eines Notbremsvorganges der Leerlauf des Antriebsmotors (20) eingelegt wird.

4. Verfahren nach einem der vorhergehenden Ansprüche, **dadurch gekennzeichnet, dass** die weiteren Maßnahmen zur Reduzierung der Geschwindigkeit des Kraftfahrzeuges beendet werden, sobald sich das Kraftfahrzeug im Stillstand befindet.

5. Verfahren nach einem der Ansprüche 1 bis 3, **dadurch gekennzeichnet, dass** die Parkstellung eines automatischen Getriebes eingelegt wird, nachdem die Durchführung eines Notbremsvorganges das Kraftfahrzeug derart verzögert hat, dass sich dessen Geschwindigkeit unterhalb einer vorbestimmten Geschwindigkeitsschwelle (V_{grenz}) befindet.

6. Vorrichtung zum Betrieb eines Kraftfahrzeugs, das eine Betriebsbremsanlage mit einem ansteuerbaren Druckerzeuger (16) und eine mittels Fremdkraft betätigbare Feststellbremsanlage aufweist, wobei die Feststellbremsanlage im wesentlichen aus einem Bedienelement (7), einer elektronischen Steuereinheit (6), der Raddrehzahlwerte von Raddrehzahlsensoren (12, 13) zugeführt werden, mindestens einer Einheit (1) zur Erzeugung einer Zuspannkraft sowie mit durch die Einheit (1) zuspannbaren Bremseinrichtungen (4) an wenigstens einer Achse gebildet wird, und wobei eine Betätigung des Bedienelementes (7) während der Fahrt des Kraftfahrzeugs eine Ansteuerung des Druckerzeugers (16) zur Durchführung eines Notbremsvorgangs bewirkt, während eine Betätigung des Bedienelement (7) im Stillstand des Kraftfahrzeugs eine Ansteuerung der Einheit (1) zur Einleitung eines Feststellbremsvorganges bewirkt, **und** Mittel vorgesehen sind, die während der Durchführung eines Notbremsvorganges weitere Maßnahmen zur Reduzierung der Geschwindigkeit des Kraftfahrzeuges durchführen, **dadurch gekennzeichnet,** dassdie Mittel zur Reduzierung der Geschwindigkeit des Kraftfahrzeuges während der Durchführung eines Notbremsvorganges das Motormoment des Antriebsmotors (20) unterdrücken, die Stellung des Fahrpedals (18) ignorieren, sodass eine mögliche Beschleunigungsanforderung des Fahrzeugführers nicht durchgeführt wird, und/oder den Schub des Antriebsmotors (20) abschalten.

7. Vorrichtung nach Anspruch 6, **dadurch gekennzeichnet, dass** die Mittel die Maßnahmen zur Reduzierung der Geschwindigkeit des Kraftfahrzeuges beenden, sobald sich das Kraftfahrzeug im Stillstand befindet.

8. Vorrichtung nach einem der Ansprüche 6 bis 7, **dadurch gekennzeichnet, dass** der ansteuerbare Druckerzeuger (16) als hydraulische Pumpe ausgebildet ist.

## Claims

1. Method for operating a motor vehicle which has a service brake system with a controllable pressure generator (16) and a parking brake system which can be activated by means of extraneous force, wherein the parking brake system is formed essentially from an operator control element (7), an electronic control unit (6) to which wheel speed values of wheel speed sensors (12, 13) are fed, at least one unit (1) for generating a brake application force as well as having brake devices (4) which can be applied by the unit (1) on at least one axle, and wherein activation of the operator control element (7) while the motor vehicle is travelling brings about actuation of the pressure generator (16) in order to carry out an emergency braking process, while activation of the operator control element (7) in the stationary state of the motor vehicle brings about actuation of the unit (1) for initiating a parking brake process, and further measures for reducing the speed of the motor vehicle are carried out while an emergency braking process is being carried out, **characterized in that** in order to reduce the speed of the motor vehicle while an emergency braking process is being carried out the position of the accelerator pedal (18) is ignored and a possible acceleration request of the vehicle driver by depressing the accelerator pedal (18) is not carried out.

2. Method according to Claim 1, **characterized in that** in order to reduce the speed of the motor vehicle while an emergency braking process is being carried out the engine torque of the drive engine (20) is suppressed.

3. Method according to one of the preceding claims, **characterized in that** in order to reduce the speed of the motor vehicle while an emergency braking process is being carried out the idling mode of the drive engine (20) is engaged.

4. Method according to one of the preceding claims, **characterized in that** the further measures for reducing the speed of the motor vehicle are ended as soon as the motor vehicle is in the stationary state.

5. Method according to one of Claims 1 to 3, **characterized in that** the parked position of an automatic transmission is engaged after the execution of an emergency braking process has decelerated the motor vehicle in such a way that the speed thereof is below a predetermined speed threshold (Vₗᵢₘᵢₜ).

6. Device for operating a motor vehicle which has a service brake system with a controllable pressure generator (16) and a parking brake system which can be activated by means of extraneous force, wherein the parking brake system is formed essentially from an operator control element (7), an electronic control unit (6) to which wheel speed values of wheel speed sensors (12, 13) are fed, at least one unit (1) for generating a brake application force as well as having brake devices (4) which can be applied by the unit (1) on at least one axle, and wherein activation of the operator control element (7) while the motor vehicle is travelling brings about actuation of the pressure generator (16) in order to carry out an emergency braking process, while activation of the operator control element (7) in the stationary state of the motor vehicle brings about actuation of the unit (1) for initiating a parking brake process, **and** means are provided which carry out further measures for reducing the speed of the motor vehicle while an emergency braking process is being carried out, **characterized in that** the means for reducing the speed of the motor vehicle while an emergency braking process is being carried out suppress the engine torque of the drive engine (20), ignore the position of the accelerator pedal (18), with the result that a possible acceleration request of the vehicle driver is not carried out, and/or switch off the thrust of the drive engine (20).

7. Device according to Claim 6, **characterized in that** the means finish the measures for reducing the speed of the motor vehicle as soon as the motor vehicle is in the stationary state.

8. Device according to one of Claims 6 to 7, **characterized in that** the controllable pressure generator (16) is embodied as a hydraulic pump.

## Revendications

1. Procédé pour faire fonctionner un véhicule automobile, comportant une installation de frein de service avec un générateur de pression (16) excitable et avec une installation de frein de stationnement actionnable à l'aide d'une force externe, l'installation de frein de stationnement étant formée pour l'essentiel à partir d'un élément de commande (7), avec une unité de commande électronique (6) à laquelle sont amenées des valeurs de vitesse de rotation de roue provenant de capteurs de vitesse de rotation de roue (12, 13), avec au moins une unité (1) pour produire une force de traction ainsi qu'avec des dispositifs de frein (4) pouvant être serrés par l'unité (1) au niveau d'au moins un essieu et un actionnement de l'élément de commande (7) provoquant une excitation du générateur de pression (16) pour mettre en oeuvre un processus de freinage d'urgence pendant la conduite du véhicule automobile, une excitation de l'unité (1) agissant pour introduire un processus de freinage de stationnement pendant un actionnement de l'élément de commande (7), à l'arrêt du véhicule automobile, et des mesures supplémentaires de réduction de la vitesse du véhicule automobile étant prises pendant la mise en oeuvre d'un processus de freinage d'urgence, **caractérisé en ce que** pour réduire la vitesse du véhicule automobile pendant la mise en oeuvre d'un processus de freinage d'urgence, la position de la pédale d'accélérateur (18) est ignorée et qu'une éventuelle demande d'accélération du conducteur du véhicule par compression de la pédale d'accélérateur (18) n'est pas mise en oeuvre.

2. Procédé selon la revendication 1, **caractérisé en ce que** pour réduire la vitesse du véhicule automobile pendant la mise en oeuvre d'un processus de freinage d'urgence, le couple de moteur du moteur d'entraînement (20) est asservi.

3. Procédé selon l'une quelconque des revendications précédentes, **caractérisé en ce que** pour réduire la vitesse du véhicule automobile pendant la mise en oeuvre d'un processus de freinage d'urgence, la marche à vide du moteur d'entraînement (20) est passée.

4. Procédé selon l'une quelconque des revendications précédentes, **caractérisé en ce que** les mesures supplémentaires pour réduire la vitesse du véhicule automobile prennent fin dès que le véhicule automobile se trouve à l'arrêt.

5. Procédé selon l'une quelconque des revendications 1 à 3, **caractérisé en ce que** la position de stationnement d'une boîte de vitesses automatique est passée, après que la mise en oeuvre d'un processus de freinage d'urgence a ralenti le véhicule automobile de telle sorte que sa vitesse se trouve en dessous d'un seuil de vitesse prédéfini (V_{grenz}).

6. Dispositif pour faire fonctionner un véhicule automobile, comportant une installation de frein de service avec un générateur de pression (16) excitable et avec une installation de frein de stationnement actionnable à l'aide d'une force externe, l'installation de frein de stationnement étant formée pour l'essentiel d'un élément de commande (7), avec une unité de commande électronique (6) à laquelle des valeurs de vitesse de rotation de roue provenant des capteurs de vitesse de rotation de roue (12, 13) sont amenées, avec au moins une unité (1) pour produire une force de traction ainsi qu'avec des dispositifs de frein (4) pouvant être serrés par l'unité (1) au niveau d'au moins un essieu et un actionnement de l'élément de commande (7) provoquant une excitation du générateur de pression (16) pour mettre en oeuvre un processus de freinage d'urgence pendant la conduite du véhicule automobile, une excitation de l'unité (1) provoquant l'introduction d'un processus de freinage de stationnement pendant un actionnement de l'élément de commande (7) à l'arrêt du véhicule automobile et des moyens étant prévus pour réaliser pendant la mise en oeuvre d'un processus de freinage d'urgence des mesures supplémentaires pour réduire la vitesse du véhicule automobile, **caractérisé en ce que** les moyens prévus pour réduire la vitesse du véhicule automobile pendant la mise en oeuvre d'un processus de freinage d'urgence asservissent le couple de moteur du moteur d'entraînement (20), ignorent la position de la pédale d'accélérateur (18), de sorte qu'une éventuelle demande d'accélération du conducteur du véhicule n'est pas mise en oeuvre et/ou que la poussée du moteur d'entraînement (20) est déconnectée.

7. Dispositif selon la revendication 6, **caractérisé en ce que** les moyens mettent un terme aux mesures prises pour réduire la vitesse du véhicule automobile dès que le véhicule automobile se trouve à l'arrêt.

8. Dispositif selon l'une quelconque des revendications 6 à 7, **caractérisé en ce que** le générateur de pression (16) excitable prend la forme d'une pompe hydraulique.
